# FASCICULE DE BREVET EUROPEEN

(11) **EP 3 688 243 B1**
(45) Date de publication et mention de la délivrance du brevet: **15.12.2021**
(21) Numéro de dépôt: 18766273.9
(22) Date de dépôt: 14.09.2018
(51) Int. Cl.: E04B 2/86, E04C 2/288, E04C 2/52, F24D 3/00, F24D 3/14, E04C 2/04, E04B 5/48

(54) **ÉLÉMENT DE CONSTRUCTION PRÉFABRIQUÉ, BÂTIMENT COMPRENANT LEDIT ÉLÉMENT DE CONSTRUCTION ET PROCÉDÉ DE FABRICATION DE L'ÉLÉMENT DE CONSTRUCTION ASSOCIÉ**
FERTIGBAUELEMENT, GEBÄUDE MIT DIESEM BAUELEMENT UND VERFAHREN ZUR HERSTELLUNG DES ZUGEHÖRIGEN BAUELEMENTS
PREFABRICATED CONSTRUCTION ELEMENT, BUILDING COMPRISING SAID CONSTRUCTION ELEMENT AND METHOD FOR PRODUCING THE ASSOCIATED CONSTRUCTION ELEMENT

(30) Priorité: 28.09.2017 FR 1759014
(43) Date de publication de la demande: 05.08.2020
(73) Titulaire: Spurgin Leonhart, 67600 Selestat (FR)
(72) Inventeur: BOLLARD, Pierre, 74410 Saint-Jorioz (FR); LAUGNER, Michel, 67600 Selestat (FR)
(74) Mandataire: Cabinet Nuss
(86) Numéro de dépôt international: PCT/EP2018/074957
(87) Numéro de publication internationale: WO 2019/063323

(56) Documents cités:
- EP-A2- 2 122 075
- DE-A1- 10 214 967
- DE-A1-102011 075 463
- DE-U1- 29 824 598

## Description

L'invention concerne le domaine des éléments de construction préfabriqués, tels que des murs à coffrage et isolation intégrés.

Les murs à coffrage et isolation intégrés sont bien connus de l'art antérieur et comprennent deux parois préfabriquées en béton armé, dont la paroi externe comporte une paroi isolante accolée située entre les deux parois. Ces deux parois sont maintenues espacées par des organes de liaison, préférentiellement des connecteurs synthétiques, de sorte à former un espace de coffrage, pouvant être rempli par du béton.

De tels murs à coffrage et isolation intégrés sont généralement destinés à la réalisation de parois porteuses ou non porteuses, en infrastructure ou superstructure.

Les murs à coffrage et isolation intégrés sont particulièrement appréciés du fait de leurs propriétés d'isolation thermique. En effet, la mise en place d'une isolation intégrée à la paroi externe du mur à coffrage et isolation intégrés garantit une isolation thermique performante, puisqu'une telle isolation thermique par l'extérieur permet d'éviter les ponts thermiques.

DE 298 24 598 U1 divulgue un élément de construction préfabriqué selon le préambule de la revendication 1.

La présente invention a pour but de proposer un élément de construction, de type mur à coffrage et isolation intégrés, incorporant de nouvelles fonctionnalités qui permettent d'améliorer davantage encore les performances thermiques du bâtiment dans lequel il est intégré.

A cet effet, l'invention concerne un élément de construction préfabriqué, selon la revendication 1.

L'invention concerne également un bâtiment caractérisé en ce qu'il comprend au moins un élément de construction selon l'invention.

L'invention concerne également un procédé de fabrication d'un élément de construction consistant en un mur à coffrage et isolation intégrés selon la revendication 17.

L'invention sera mieux comprise, grâce à la description ci-après, qui se rapporte à plusieurs modes de réalisation préférés, donnés à titre d'exemples non limitatifs, et expliqués avec référence aux dessins schématiques annexés, dans lesquels :
la figure 1 est vue en coupe d'un mur à coffrage et isolation intégrés soumis à un rayonnement solaire,
la figure 2A est une vue de dessus d'une table de coffrage pour la mise en œuvre d'un procédé de fabrication selon l'invention de l'élément de construction selon l'invention,
la figure 2B est une vue de dessus d'un moule pour la mise en œuvre du procédé de fabrication selon l'invention,
la figure 2C est une vue de dessus du moule dans le fond duquel sont disposées des armatures, et illustrant l'étape de ferraillage du procédé de fabrication selon l'invention,
la figure 2D est une vue de dessus du moule de coffrage comprenant les armatures auxquelles sont fixés des moyens de circulation, et illustrant l'étape d'installation des moyens de circulation du procédé selon l'invention dans un premier mode de réalisation,
la figure 2E est une vue de dessus du moule de coffrage comprenant les armatures et les moyens de circulation noyés partiellement dans un matériau hydraulique, et illustrant l'étape de coulage du procédé selon l'invention dans un premier mode de réalisation,
la figure 2F est une vue de dessus du moule de coffrage comprenant les armatures auxquelles sont fixés des moyens de circulation, illustrant l'étape d'installation des moyens de circulation du procédé selon l'invention dans un deuxième mode de réalisation,
la figure 2G est une vue de dessus du moule de coffrage comprenant les armatures et les moyens de circulation noyés partiellement dans un matériau hydraulique, et illustrant l'étape de coulage du procédé selon l'invention dans un deuxième mode de réalisation,
la figure 3 est une vue en coupe d'une portion d'une première paroi de l'élément de construction dans laquelle sont noyés les moyens de circulation et à laquelle est associée une paroi isolante,
la figure 4 est une vue schématique montrant l'association de trois éléments de construction selon l'invention, comprenant des moyens de circulation raccordés entre eux en série,
la figure 5 est une vue schématique montrant l'association de trois éléments de construction selon l'invention, comprenant des moyens de circulation raccordés en parallèle,
la figure 6 est une vue en perspective montrant un élément de construction associé à des moyens de mise en circulation ou d'un générateur thermique,
la figure 7 est une vue en perspective montrant un élément de construction associé à une dalle intégrant des moyens de circulation, par l'intermédiaire de moyens de mise en circulation ou d'un générateur thermique,
la figure 8 est vue en coupe d'un mur à coffrage et isolation intégrés selon l'invention, intégrant une paroi de lame d'air, et soumis à un rayonnement solaire, et
la figure 9 est vue en coupe d'un mur à coffrage et isolation intégrés selon selon une variante non revendiquée, intégrant une surface en relief, et soumis à un rayonnement solaire.

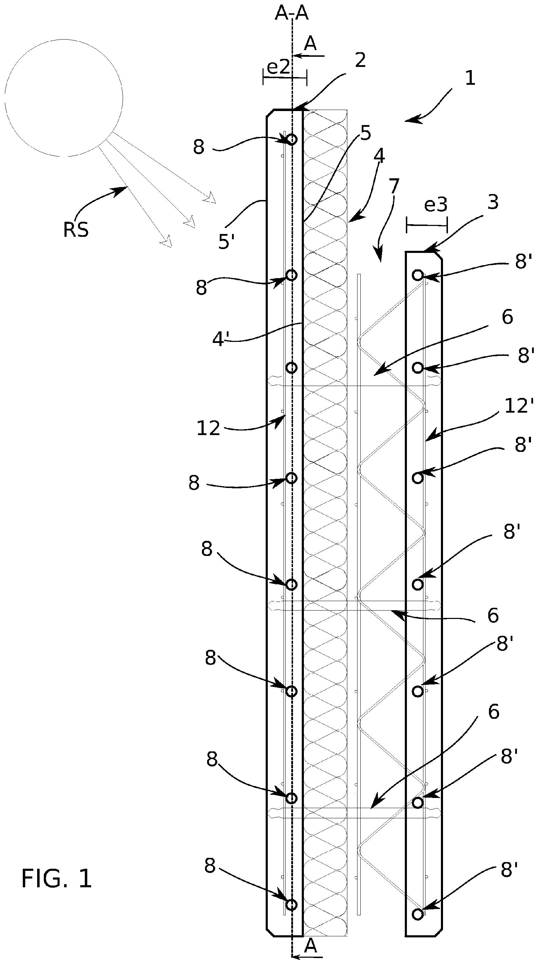

L'élément de construction 1 préfabriqué, notamment un mur à coffrage et isolation intégrés, comprend:
- une première paroi 2 externe,
- une deuxième paroi 3 interne,
   la première paroi 2 et la deuxième paroi 3 étant sensiblement parallèles entre elles et maintenues à distance l'une de l'autre,
- une paroi isolante 4 interposée entre la première paroi 2 et la deuxième paroi 3,
   la première paroi 2 comprenant une face interne 5, opposée à une face externe 5', sur laquelle est montée la paroi isolante 4 au niveau d'une face de contact 4' de la paroi isolante 4,
   la première paroi 2 et la paroi isolante 4 étant maintenues à distance de la deuxième paroi 3 par une pluralité d'organes de liaison 6 pour former un espace de coffrage 7 apte et destiné à être rempli par un matériau hydraulique de remplissage,
- au moins des premiers moyens de circulation 8 d'un fluide caloporteur (non représenté) associés à la première paroi 2 (figures 1, 3, 8 et 9).

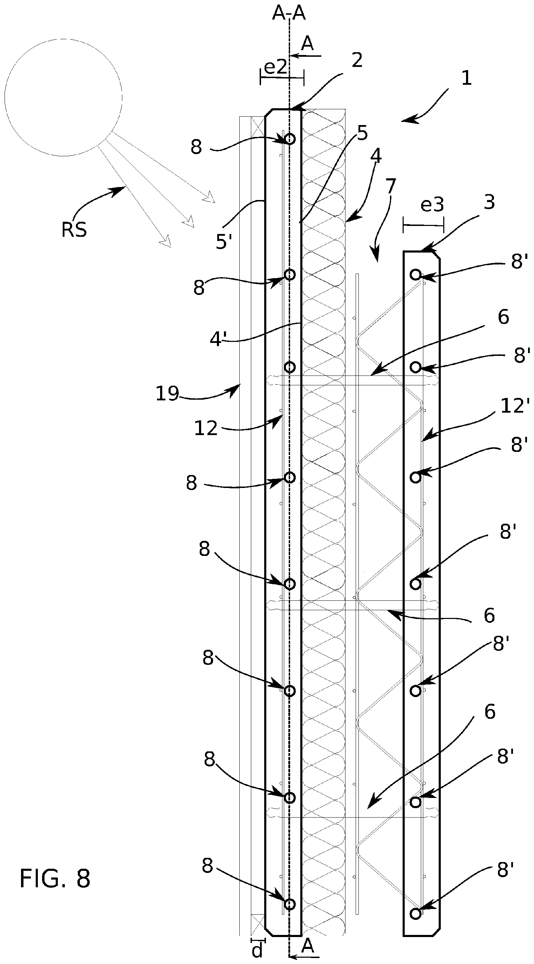

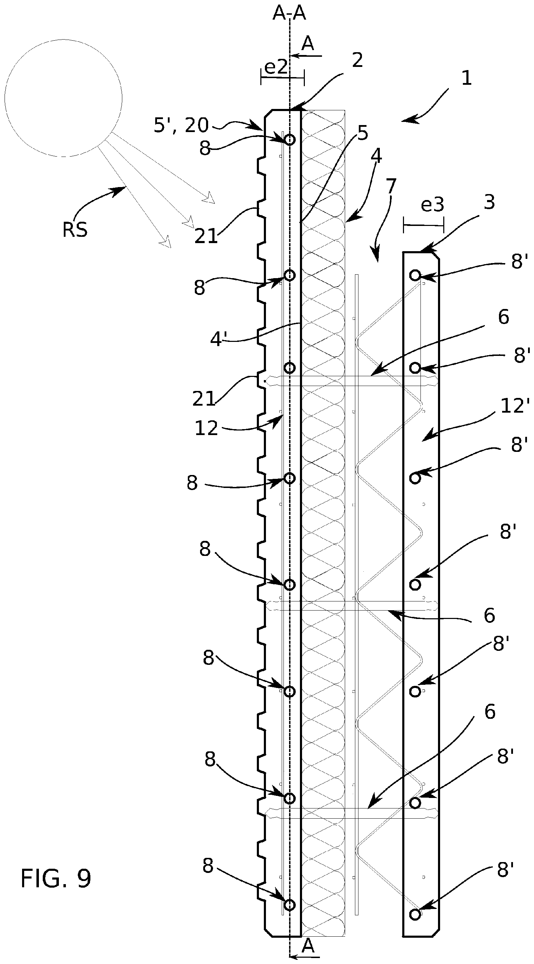

Conformément à l'invention, l'élément de construction 1 comporte au moins des moyens de concentration de rayonnement thermique 19, 20, 21 associés à la face externe 5' de la première paroi 2 pour augmenter la quantité de rayonnement thermique pouvant être emmagasinée dans le matériau M de la première paroi 2 (figures 8 et 9).

On entend par élément de construction 1 préfabriqué, un élément fabriqué en usine et destiné à être transporté vers un chantier et érigé sur ce chantier. L' élément de construction 1 selon l'invention est un mur à coffrage et isolation intégrés. De préférence, l'élément de construction 1 préfabriqué est apte et destiné à être disposé à la verticale. La face externe 5' de la première paroi 2 est généralement destinée à être située à l'extérieur d'un bâtiment (non représenté), tandis que la deuxième paroi 3 est généralement destinée à être située à l'intérieur d'un bâtiment. Les organes de liaison 6 peuvent consister en des raidisseurs ou connecteurs, préférentiellement métalliques ou en matière synthétique, telle que de la fibre de verre pouvant être revêtue ou non d'un thermoplastique. En outre, l'espace entre la première paroi 2 et la deuxième paroi 3 peut former un coffrage pouvant être rempli d'un matériau hydraulique, préférentiellement du béton, après que l'élément de construction 1 ait été érigé sur le chantier. La première paroi 2 et la deuxième paroi 3 peuvent avoir sensiblement la même forme générale.

Avantageusement, le rayonnement thermique, plus particulièrement le rayonnement solaire RS, frappant la face externe 5' de la première paroi 2, peut être absorbé dans la première paroi 2. Cette première paroi 2 est formée dans un matériau M, d'une part apte à absorber le rayonnement thermique, et d'autre part apte à conduire l'énergie thermique absorbée. Cette énergie thermique peut ensuite être transmise aux premiers moyens de circulation 8 associés à la première paroi 2. Puis, cette énergie thermique peut ensuite être transmise au fluide caloporteur, puis être stockée et transportée par ce dernier. La transmission de cette énergie thermique se fait par conduction thermique entre le matériau M de la première paroi 2 et les premiers moyens de circulation 8, puis entre les premiers moyens de circulation 8 et le fluide caloporteur. Cette énergie thermique stockée dans le fluide caloporteur peut par la suite permettre d'alimenter un échangeur thermique 13. Il en résulte que lorsque l'élément de construction 1 selon invention est implanté dans un bâtiment (non représenté), il est possible de chauffer ou de refroidir des pièces de ce bâtiment soit directement, soit indirectement par l'intermédiaire d'un échangeur thermique 13. L'élément de construction 1 comprend avantageusement au moins des moyens de concentration de rayonnement thermique 19, 20, 21 associés à la face externe 5' de la première paroi 2 pour augmenter la quantité de rayonnement thermique pouvant être emmagasinée dans le matériau M de la première paroi 2.

De manière générale, dans la présente invention, le rayonnement thermique peut être du rayonnement solaire RS.

Préférentiellement, les premiers moyens de circulation 8 sont dans un matériau présentant une flexibilité permettant une mise en œuvre par pliage manuel. Par exemple, les premiers moyens de circulation 8 peuvent être en polyéthylène réticulé, ou tout autre matériau à base de plastique et étant flexible. Bien entendu, ces exemples ne sont pas limitatifs.

Le fluide caloporteur peut être à l'état liquide ou à l'état gazeux. Le fluide caloporteur peut être choisi parmi de l'eau, de l'eau glycolée, de l'eau contenant un additif, ou tout autre liquide à base aqueuse. Bien entendu, ces exemples ne sont pas limitatifs.

L'échangeur thermique 13 peut être choisi parmi une pompe à chaleur, une chaudière, un ballon d'eau chaude, un échangeur à plaque, un échangeur à spirale, un échangeur multitubulaire, un échangeur à faisceau tubulaire horizontal, un échangeur à ailette. Bien entendu, ces exemples ne sont pas limitatifs.

Selon une variante de réalisation de l'invention illustrée aux figures 1, 6, 8 et 9, l'élément de construction 1 peut comporter les premiers moyens de circulation 8 d'un fluide caloporteur associés à la première paroi 2 et des deuxièmes moyens de circulation 8' d'un fluide caloporteur associés à la deuxième paroi 3.

Cette configuration permet avantageusement un échange thermique direct entre l'intérieur et l'extérieur du bâtiment. En effet, la première paroi 2 est destinée à être disposée à l'extérieur du bâtiment, tandis que la deuxième paroi 3 est destinée à être disposée à l'intérieur du bâtiment. Par conséquent, l'énergie thermique stockée dans le fluide caloporteur contenu dans les premiers moyens de circulation 8 peut par la suite être transmise au fluide caloporteur des deuxièmes moyens de circulation 8' pour chauffer l'intérieur du bâtiment. Inversement, l'énergie thermique stockée dans le fluide caloporteur contenu dans les deuxièmes moyens de circulation 8' peut être transmise au fluide caloporteur des premiers moyens de circulation 8 pour refroidir l'intérieur du bâtiment.

Les deuxièmes moyens de circulation 8' peuvent être similaires ou analogues aux premiers moyens de circulation 8.

Dans tous les cas, les premiers moyens de circulation 8 peuvent être noyés dans un matériau M hydraulique formant la première paroi 2 et dans l'épaisseur e2 de la première paroi 2.

Cette configuration avantageuse permet de favoriser l'échange thermique entre le matériau M de la première paroi 2 et les premiers moyens de circulation 8.

De manière alternative et selon la variante de réalisation illustrée aux figures 1, 6, 8 et 9, les premiers moyens de circulation 8 peuvent être noyés dans un matériau M hydraulique formant la première paroi 2 et dans l'épaisseur e2 de la première paroi 2 et les deuxièmes moyens de circulation 8' peuvent être noyés dans un matériau M hydraulique formant la deuxième paroi 3 et dans l'épaisseur e3 de la deuxième paroi 3.

Cette autre configuration avantageuse permet de favoriser, d'une part, l'échange thermique entre le matériau M de la première paroi 2 et les premiers moyens de circulation 8 et, d'autre part, l'échange thermique entre le matériau M de la deuxième paroi 3 et les deuxièmes moyens de circulation 8'.

Le matériau M hydraulique peut consister en du béton ou du béton fibré.

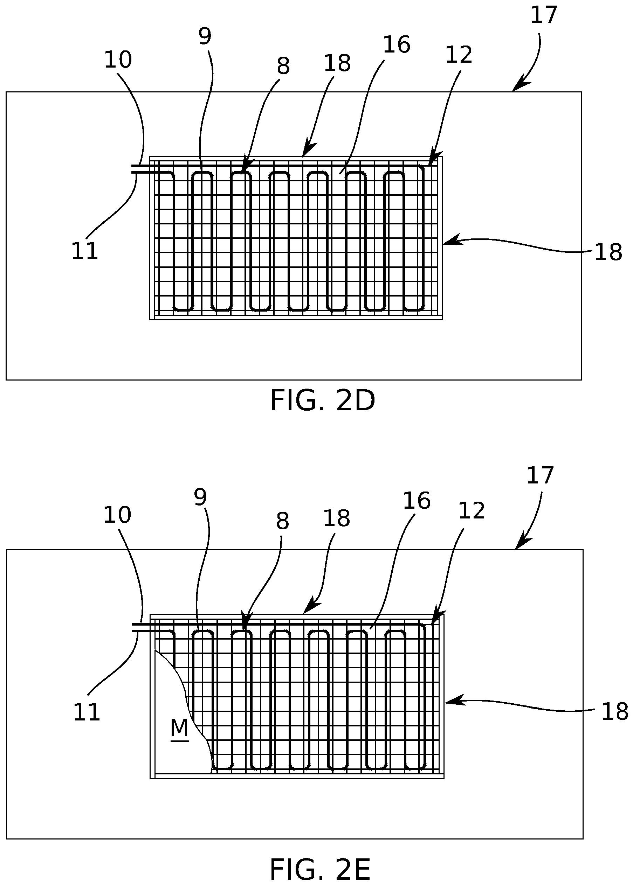

Comme l'illustrent les figures 2D à 2G, 4 et 5, les premiers moyens de circulation 8 et, le cas échéant, les deuxièmes moyens de circulation 8' peuvent comprendre un tronçon d'entrée 10, un tronçon de sortie 11, et au moins un conduit 9 relié directement ou indirectement auxdits tronçons 10, 11, le tronçon d'entrée 10 et le tronçon de sortie 11 étant au moins en partie saillants de la première paroi 2 ou de la deuxième paroi 3 auquel ils sont associés et ledit conduit 9 étant noyé dans l'épaisseur e2 de la première paroi 2 ou dans l'épaisseur e3 de la deuxième paroi 3.

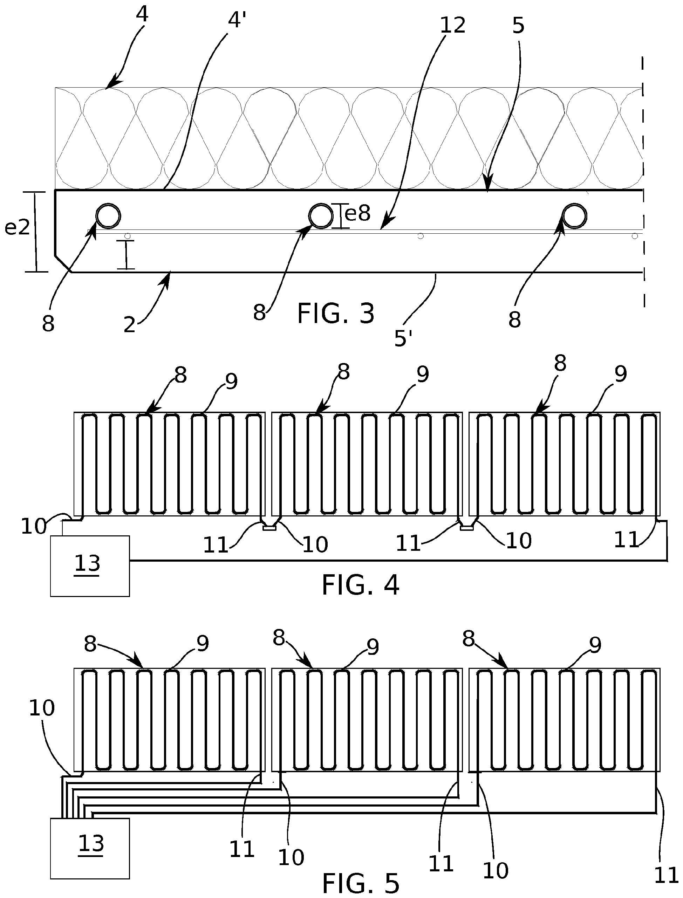

Le tronçon d'entrée 10 et le tronçon de sortie 11 des moyens de circulation 8, 8' permettent de raccorder le conduit 9, soit à des moyens de mise en circulation, soit à un échangeur thermique 13 (figures 4, 5, 6, 7), soit à d'autres moyens de circulation 8, 8' (figure 4).

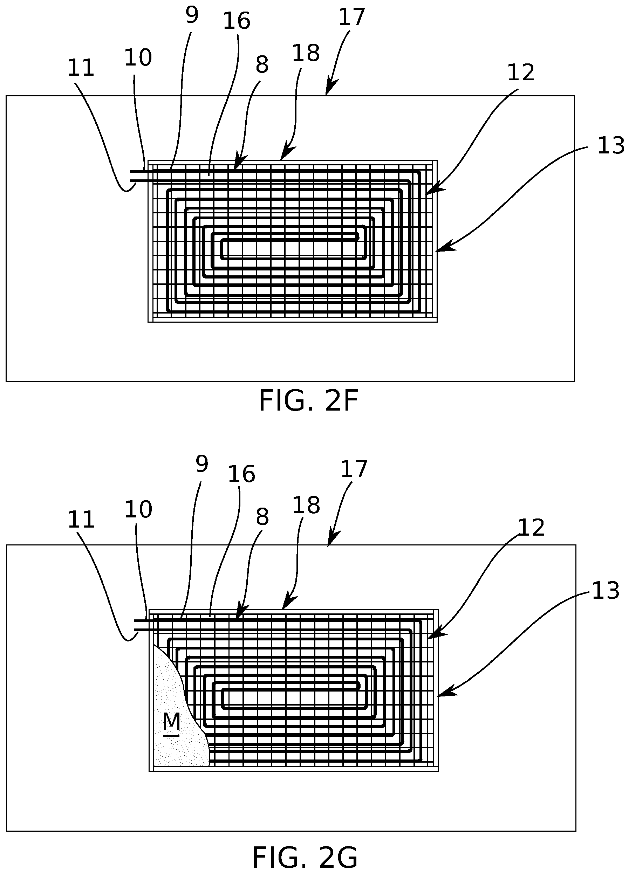

De préférence, ledit au moins un conduit 9 présente la forme d'un serpentin (figures 2D, 2E, 4 et 5) ou d'une spirale (figures 2F et 2G) comprenant respectivement une pluralité de spires ou de boucles s'étendant sensiblement dans un plan A-A d'extension longitudinale de l'élément de construction 1 (figures 1, 8 et 9).

Lorsque le conduit 9 présente la forme d'une spirale (figures 2F et 2G), l'échange thermique, soit entre le matériau M de la première paroi 2 et les premiers moyens de circulation 8, soit entre la deuxième paroi 3 et les deuxièmes moyens de circulation 8', est homogène.

De préférence, la première paroi 2 peut comprendre au moins un matériau M hydraulique intégrant des armatures 12, préférentiellement synthétiques ou métalliques, les armatures 12 étant noyées totalement dans l'épaisseur e2 de la première paroi 2 et la deuxième paroi 3 peut comprendre au moins un matériau M hydraulique intégrant des armatures 12', préférentiellement synthétiques ou métalliques, les armatures 12' étant noyées partiellement dans l'épaisseur e3 de la deuxième paroi 3 (figures 1, 2E, 2G, 3, 6, 7, 8 et 9).

De préférence, les premiers moyens de circulation 8 peuvent être fixés aux armatures 12 par des premiers moyens de fixation (non représentés) et, le cas échéant, les deuxièmes moyens de circulation 8' peuvent être fixés aux armatures 12' par des deuxièmes moyens de fixation (non représentés).

Selon une configuration alternative, les premiers moyens de circulation 8 peuvent être fixés à la paroi isolante 4 par des premiers moyens de fixation (non représentés) et, le cas échéant, les deuxièmes moyens de circulation 8' peuvent être fixés aux armatures 12' par des deuxièmes moyens de fixation (non représentés). Cette configuration est notamment préférée, lorsque la première paroi 2 ne comporte pas d'armatures 12, par exemple dans le cas où le matériau M hydraulique de la première paroi 2 est en béton fibré.

Dans tous les cas, ces premiers et/ou deuxièmes moyens de fixation peuvent être des clips dédiés, des ligatures, ou des agrafes, mises en place manuellement ou avec un pistolet à ligaturer. Bien entendu, ces exemples ne sont pas limitatifs.

Dans tous les cas, l'épaisseur e2 de la première paroi 2 peut être comprise entre 30 et 200 millimètres et l'épaisseur e8 des premiers moyens de circulation 8 peut être comprise entre 8 et 30 millimètres (figure 3). Ceci permet de garantir l'enrobage, le cas échéant, des armatures 12 de la première paroi 2, ainsi que l'enrobage des premiers moyens de circulation 8 dans le matériau M hydraulique, préférentiellement du béton.

Selon une variante de réalisation non illustrée de l'invention, l'élément de construction 1 peut comprendre au moins un capteur de température (non représenté) associé aux premiers moyens de circulation 8.

Avantageusement, le capteur de température permet de mesurer la température du fluide caloporteur que comprennent les premiers moyens de circulation 8. Bien entendu, l'élément de construction 1 peut également comprendre au moins un autre capteur de température (non représenté) associé aux deuxièmes moyens de circulation 8'.

Selon une variante de réalisation non illustrée de l'invention, l'élément de construction 1 peut comprendre au moins un capteur de rayonnement thermique ou solaire associé à la première paroi 2.

Comme illustrée à la figure 8, les moyens de concentration de rayonnement thermique comprennent au moins une paroi de lame d'air 19 associée à la face externe 5' de la première paroi 2 et la paroi de lame d'air 19 peut être maintenue à distance d de la face externe 5' de sorte à réaliser un espace vide entre la face externe 5' et la paroi de lame d'air 19 pour former une lame d'air. La distance d entre la face externe 5' et la paroi de lame d'air 19 peut être comprise entre 2 millimètres et 50 millimètres.

Avantageusement, l'espace vide entre la paroi de lame d'air 19 et la face externe 5' est rempli d'air. Sous l'effet du rayonnement thermique, préférentiellement du rayonnement solaire RS, l'air emmagasine de l'énergie thermique qui peut ensuite être transmise au matériau M de la première paroi 2 par conduction thermique, ce qui permet de mieux concentrer ou emmagasiner le rayonnement solaire RS dans le matériau M la première paroi 2.

Préférentiellement, la paroi de lame d'air 19 peut être choisie parmi : une plaque en verre, une plaque en polycarbonate, une tôle métallique ou tout autre moyen permettant de laisser passer le rayonnement solaire au travers de cette paroi de lame d'air, et piégeant la lame d'air de façon à empêcher les flux d'air extérieurs de refroidir le matériau M de la première paroi 2.

Selon une autre variante non revendiquée et illustrée à la figure 9, les moyens de concentration de rayonnement thermique comprennent une pluralité de reliefs 21 formés sur la face externe 5' de la première paroi 2 et formant une surface en relief 20.

Avantageusement, la présence de reliefs 21 à la surface de la face externe 5' permet d'augmenter la surface d'échange. Il en résulte qu'une plus grande quantité de rayonnement thermique peut être emmagasinée par le matériau M de la première paroi 2 comparativement à une face externe 5' présentant une surface lisse telle qu'illustrée à la figure 1.

Préférentiellement, les reliefs 21 peuvent consister en une forme ondulée présentant une pluralité d'ondulations ou en une forme striée présentant une pluralité de rainures au niveau de la face externe 5' de la première paroi 2.

Avantageusement, la variante de réalisation de l'élément de construction 1 selon l'invention intégrant une paroi de lame d'air 19 décrite ci-dessus (figure 8) et la variante de réalisation de l'élément de construction 1 selon l'invention intégrant une surface en relief 20 décrite ci-dessus (figure 9) sont compatibles et peuvent être combinées pour accentuer l'effet recherché de réchauffement de la première paroi 2.

Conformément à l'invention, le bâtiment est caractérisé en ce qu'il comprend au moins un élément de construction 1 selon l'invention.

Selon une variante de réalisation de l'invention illustrée à la figure 4, le bâtiment peut comprendre au moins deux éléments de construction 1 adjacents comprenant chacun au moins des premiers moyens de circulation 8 propres qui sont raccordés entre eux par des moyens de raccordement.

Selon une autre variante de réalisation de l'invention illustrée à la figure 5, le bâtiment peut comprendre au moins deux éléments de construction 1 adjacents comprenant chacun au moins des premiers moyens de circulation 8 propres qui sont chacun raccordés indépendamment à des moyens de mise en circulation ou un échangeur thermique 13 commun.

La connexion d'au moins deux éléments de construction 1 selon l'invention, en série ou en parallèle, permet de maximiser la surface d'échange thermique entre le matériau M de la première paroi 2 et les premiers moyens de circulation 8.

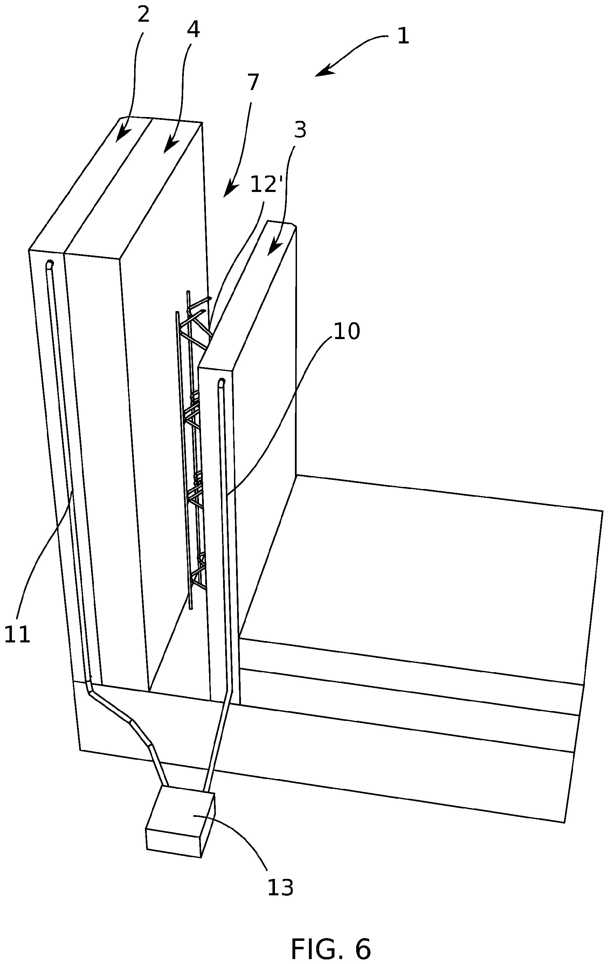

Selon une autre variante de réalisation de l'invention illustrée à la figure 6, le bâtiment peut comprendre au moins un élément de construction 1 comprenant des premiers moyens de circulation 8 prévus dans la première paroi 2 et des deuxièmes moyens de circulation 8' prévus dans la deuxième paroi 3, lesquels sont raccordés entre eux par l'intermédiaire de moyens de mise en circulation ou d'un échangeur thermique 13.

Comme expliqué précédemment, cette configuration permet avantageusement un échange thermique direct entre l'intérieur et l'extérieur du bâtiment. Il en résulte qu'il est possible de chauffer ou de refroidir l'intérieur du bâtiment.

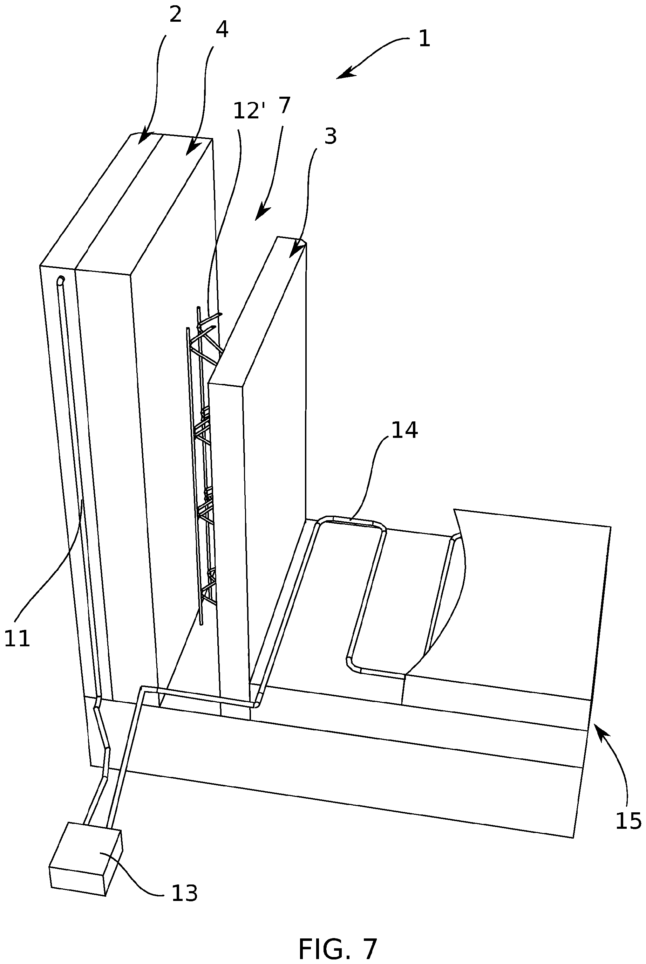

Selon une autre variante de réalisation de l'invention illustrée à la figure 7, le bâtiment peut comprendre au moins une dalle 15 comprenant des moyens de circulation 14 et un élément de construction 1 comprenant des premiers moyens de circulation 8, lesquels sont raccordés aux moyens de circulation 14 de la dalle 15 par l'intermédiaire de moyens de mise en circulation ou un échangeur thermique 13.

Cette configuration permet avantageusement un échange thermique direct entre l'intérieur et l'extérieur du bâtiment. En effet, la première paroi 2 est destinée à être disposée à l'extérieur du bâtiment, tandis que la dalle 15 est destinée à être disposée à l'intérieur du bâtiment. Par conséquent, l'énergie thermique stockée dans le fluide caloporteur contenu dans les premiers moyens de circulation 8 peut par la suite être transmise au fluide caloporteur des moyens de circulation 14 de la dalle 15 pour chauffer l'intérieur du bâtiment. Il en résulte qu'il est possible de chauffer la dalle 15 et donc l'intérieur du bâtiment. Inversement, l'énergie thermique stockée dans le fluide caloporteur contenu dans les moyens de circulation 14 de la dalle 15 peut être transmise au fluide caloporteur des premiers moyens de circulation 8 pour refroidir l'intérieur du bâtiment. Dans ce cas, il est par exemple possible, pendant la nuit, d'évacuer la chaleur accumulée durant la journée à l'intérieur du bâtiment.

L'échangeur thermique 13 implanté dans le bâtiment selon l'invention peut être tel que décrit précédemment.

Conformément à l'invention, le procédé de fabrication d'un élément de construction 1, notamment un mur à coffrage et isolation intégrés, est caractérisé en ce que l'élément de construction 1 est selon l'invention, et en ce que le procédé comporte au moins les étapes suivantes :
- une étape d'installation des moyens de circulation, lors de laquelle les moyens de circulation 8, 8' sont disposés dans un moule 17, 18 (figures 2D et 2F),
- une étape de coulage, lors de laquelle un matériau M hydraulique est coulé dans ledit moule 17, 18 pour noyer au moins lesdits moyens de circulation 8, 8' pour former une première paroi 2 ou une deuxième paroi 3 de l'élément de construction 1 préfabriqué (figures 2E et 2G).

Avantageusement, de cette façon, une première paroi 2 ou une deuxième paroi 3 de l'élément de construction 1 préfabriqué selon l'invention peut être obtenue.

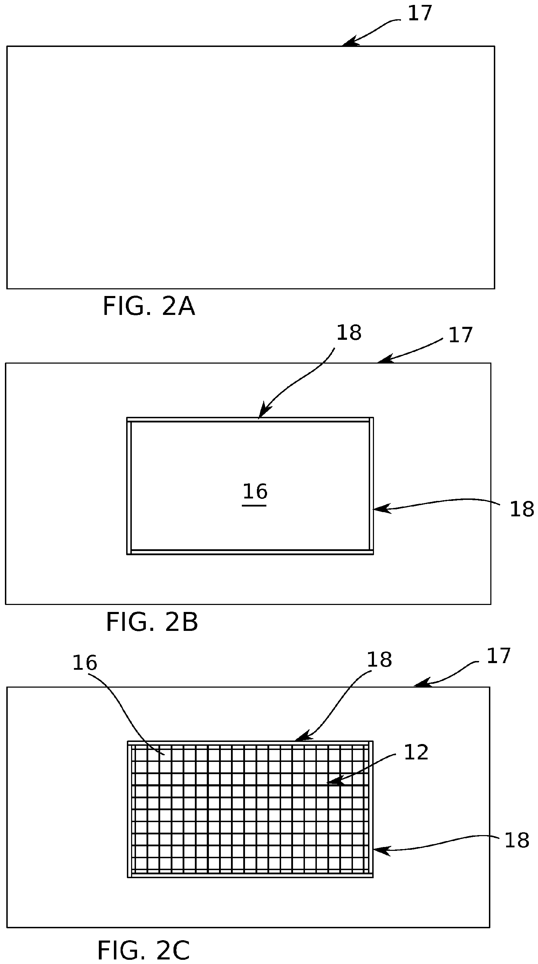

Préférentiellement, le procédé peut comprendre une étape de ferraillage, préalable à l'étape d'installation des moyens de circulation, consistant à disposer au moins des armatures 12, 12' dans le fond 16 du moule 17, 18 (figures 2B et 2C), lors de l'étape d'installation des moyens de circulation, les moyens de circulation 8, 8' peuvent être fixés aux armatures 12, 12' par des moyens de fixation (non représentés) (figures 2D et 2F), et lors de l'étape de coulage, le matériau M hydraulique peut être coulé dans ledit moule 17, 18 pour noyer au moins les armatures 12, 12' et lesdits moyens de circulation 8, 8' pour former la première paroi 2 ou la deuxième paroi 3 de l'élément de construction 1 préfabriqué (figures 2E et 2G).

Le moule peut comprendre une table de coffrage 17 (figure 2A) et une pluralité de règles de coffrage 18 (figure 2B). Le fond 16 du moule peut correspondre à au moins une portion de la table de coffrage 17. La table de coffrage 17 peut sensiblement être contenue dans un plan.

Les règles de coffrage 18 peuvent être métalliques et aimantées et la table de coffrage 17 peut être métallique.

Bien entendu, l'invention n'est pas limitée aux modes de réalisation décrits et représentés aux dessins annexés. Des modifications restent possibles, notamment du point de vue de la constitution des divers éléments ou par substitution d'équivalents techniques, sans sortir pour autant du domaine de protection de l'invention, tel que décrit dans les revendications annexées.

## Revendications

1. Elément de construction (1) préfabriqué comprenant :
- une première paroi (2) externe,
- une deuxième paroi (3) interne,
la première paroi (2) et la deuxième paroi (3) étant sensiblement parallèles entre elles et maintenues à distance l'une de l'autre,
- une paroi isolante (4) interposée entre la première paroi (2) et la deuxième paroi (3),
au moins des premiers moyens de circulation (8) d'un fluide caloporteur associés à la première paroi (2),
- au moins des moyens de concentration de rayonnement thermique (19, 20, 21) associés à la face externe (5') de la première paroi (2) pour augmenter la quantité de rayonnement thermique pouvant être emmagasinée dans le matériau (M) de la première paroi (2)
ledit élément de construction (1) est **caractérisé**
**en ce qu'**il consiste en un mur à coffrage et isolation intégrés,
**en ce que** la première paroi (2) comprend une face interne (5), opposée à une face externe (5'), sur laquelle est montée la paroi isolante (4) au niveau d'une face de contact (4') de la paroi isolante (4),en ce que la première paroi (2) et la paroi isolante (4) sont maintenues à distance de la deuxième paroi (3) par une pluralité d'organes de liaison (6) pour former un espace de coffrage (7) apte et destiné à être rempli par un matériau hydraulique de remplissage,
**en ce que** les moyens de concentration de rayonnement thermique comprennent une paroi de lame d'air (19) associée à la face externe (5') de la première paroi (2) et en ce que la paroi de lame d'air (19) est maintenue à distance (d) de la face externe (5') de sorte à réaliser un espace vide entre la face externe (5') et la paroi de lame d'air (19) pour former une lame d'air.

2. Elément de construction selon la revendication 1, **caractérisé en ce qu'**il comporte les premiers moyens de circulation (8) d'un fluide caloporteur associés à la première paroi (2) et des deuxièmes moyens de circulation (8') d'un fluide caloporteur associés à la deuxième paroi (3).

3. Elément de construction selon les revendications 1 ou 2, **caractérisé en ce que** les premiers moyens de circulation (8) sont noyés dans un matériau (M) hydraulique formant la première paroi (2) et dans l'épaisseur (e2) de la première paroi (2) et, le cas échéant **en ce que** les deuxièmes moyens de circulation (8') sont noyés dans un matériau (M) hydraulique formant la deuxième paroi (3) et dans l'épaisseur (e3) de la deuxième paroi (3).

4. Elément de construction selon l'une quelconque des revendications 1 à 3, **caractérisé en ce que** les premiers moyens de circulation (8) et, le cas échéant, les deuxièmes moyens de circulation (8') comprennent un tronçon d'entrée (10), un tronçon de sortie (11), et au moins un conduit (9) relié directement ou indirectement auxdits tronçons (10, 11), le tronçon d'entrée (10) et le tronçon de sortie (11) étant au moins en partie saillants de la première paroi (2) ou de la deuxième paroi (3) auquel ils sont associés et ledit conduit (9) étant noyé dans l'épaisseur (e2) de la première paroi (2) ou dans l'épaisseur (e3) de la deuxième paroi (3).

5. Elément de construction selon la revendication 4, **caractérisé en ce que** ledit au moins un conduit (9) présente la forme d'un serpentin ou d'une spirale comprenant respectivement une pluralité de spires ou de boucles s'étendant sensiblement dans un plan (A-A) d'extension longitudinale de l'élément de construction (1).

6. Elément de construction selon l'une quelconque des revendications 1 à 5, **caractérisé en ce que** la première paroi (2) comprend au moins un matériau (M) hydraulique intégrant des armatures (12), préférentiellement synthétiques ou métalliques, les armatures (12) étant noyées totalement dans l'épaisseur (e2) de la première paroi (2) et **en ce que** la deuxième paroi (3) comprend au moins un matériau (M) hydraulique intégrant des armatures (12'), préférentiellement synthétiques ou métalliques, les armatures (12') étant noyées partiellement dans l'épaisseur (e3) de la deuxième paroi (3).

7. Elément de construction selon la revendication 6, **caractérisé en ce que** les premiers moyens de circulation (8) sont fixés aux armatures (12) par des premiers moyens de fixation et, le cas échéant, **en ce que** les deuxièmes moyens de circulation (8') sont fixés aux armatures (12') par des deuxièmes moyens de fixation.

8. Elément de construction selon la revendication 6, **caractérisé en ce que** les premiers moyens de circulation (8) sont fixés à la paroi isolante (4) par des premiers moyens de fixation et, le cas échéant, **en ce que** les deuxièmes moyens de circulation (8') sont fixés aux armatures (12') par des deuxièmes moyens de fixation.

9. Elément de construction selon l'une quelconque des revendications 1 à 8, **caractérisé en ce que** l'épaisseur (e2) de la première paroi (2) est comprise entre 30 et 200 millimètres et **en ce que** l'épaisseur (e8) des premiers moyens de circulation (8) est comprise entre 8 et 30 millimètres.

10. Elément de construction selon l'une quelconque des revendications 1 à 9, **caractérisé en ce qu'**il comprend au moins un capteur de température associé aux premiers moyens de circulation (8).

11. Elément de construction selon l'une quelconque des revendications 1 à 10, **caractérisé en ce qu'**il comprend au moins un capteur de rayonnement thermique ou solaire associé à la première paroi (2).

12. Bâtiment **caractérisé en ce qu'**il comprend au moins un élément de construction (1) selon l'une quelconque des revendications 1 à 11.

13. Bâtiment selon la revendication 12, **caractérisé en ce qu'**il comprend au moins deux éléments de construction (1) adjacents comprenant chacun au moins des premiers moyens de circulation (8) propres qui sont raccordés entre eux par des moyens de raccordement.

14. Bâtiment selon la revendication 12, **caractérisé en ce qu'**il comprend au moins deux éléments de construction (1) adjacents comprenant chacun au moins des premiers moyens de circulation (8) propres qui sont chacun raccordés indépendamment à des moyens de mise en circulation ou un échangeur thermique (13) commun.

15. Bâtiment selon la revendication 12, **caractérisé en ce qu'**il comprend au moins un élément de construction (1) comprenant des premiers moyens de circulation (8) prévus dans la première paroi (2) et des deuxièmes moyens de circulation (8') prévus dans la deuxième paroi (3), lesquels sont raccordés entre eux par l'intermédiaire de moyens de mise en circulation ou d'un échangeur thermique (13).

16. Bâtiment selon la revendication 12, **caractérisé en ce qu'**il comprend au moins une dalle (15) comprenant des moyens de circulation (14) et un élément de construction (1) comprenant des premiers moyens de circulation (8), lesquels sont raccordés aux moyens de circulation (14) de la dalle (15) par l'intermédiaire de moyens de mise en circulation ou d'un échangeur thermique (13).

17. Procédé de fabrication d'un élément de construction (1) consistant en un mur à coffrage et isolation intégrés,
procédé **caractérisé en ce que** l'élément de construction (1) est selon l'une quelconque des revendications 1 à 11, et **en ce que** le procédé comporte au moins les étapes suivantes :
- une étape d'installation des moyens de circulation, lors de laquelle les moyens de circulation (8, 8') sont disposés dans un moule (17, 18),
- une étape de coulage, lors de laquelle un matériau (M) hydraulique est coulé dans ledit moule (17, 18) pour noyer au moins lesdits moyens de circulation (8, 8') pour former une première paroi (2) ou une deuxième paroi (3) de l'élément de construction (1) préfabriqué.

18. Procédé selon la revendication 17, **caractérisé en ce qu'**il comprend une étape de ferraillage, préalable à l'étape d'installation des moyens de circulation, consistant à disposer au moins des armatures (12, 12') dans le fond (16) du moule (17, 18), **en ce que** lors de l'étape d'installation des moyens de circulation, les moyens de circulation (8, 8') sont fixés aux armatures (12, 12') par des moyens de fixation, et **en ce que**, lors de l'étape de coulage, le matériau (M) hydraulique est coulé dans ledit moule (17, 18) pour noyer au moins les armatures (12, 12') et lesdits moyens de circulation (8, 8') pour former la première paroi (2) ou la deuxième paroi (3) de l'élément de construction (1) préfabriqué.

## Patentansprüche

1. Fertigbauelement (1), umfassend:
- eine äußere erste Wand (2),
- eine innere zweite Wand (3),
wobei die erste Wand (2) und die zweite Wand (3) im Wesentlichen parallel zueinander sind und in einem Abstand zueinander gehalten werden,
- eine Dämmwand (4), die zwischen der ersten Wand (2) und der zweiten Wand (3) angeordnet ist,
- zumindest erste Mittel (8) zur Zirkulation eines Wärmeträgerfluids, die mit der ersten Wand (2) verbunden sind,
- zumindest Mittel (19, 20, 21) zur Konzentration von Wärmestrahlung, die mit der Außenseite (5') der ersten Wand (2) verbunden sind, um die Menge an Wärmestrahlung, die im Material (M) der ersten Wand (2) gespeichert werden kann, zu erhöhen,
wobei das Bauelement (1) **dadurch gekennzeichnet ist, dass** es aus einer Wand mit integrierter Schalung und Dämmung besteht,
dass die erste Wand (2) eine Innenseite (5) umfasst, die einer Außenseite (5') gegenüberliegt und an der die Dämmwand (4) im Bereich einer Kontaktseite (4') der Dämmwand (4) montiert ist,
dass die erste Wand (2) und die Dämmwand (4) durch mehrere Verbindungselemente (6) in einem Abstand zur zweiten Wand (3) gehalten werden, um einen Schalungsraum (7) zu bilden, der mit einem hydraulischen Füllmaterial gefüllt werden kann und soll,
dass die Mittel zur Konzentration von Wärmestrahlung eine Luftspaltwand (19) umfassen, die mit der Außenseite (5') der ersten Wand (2) verbunden ist, und
dass die Luftspaltwand (19) in einem Abstand (d) zur Außenseite (5') gehalten wird, so dass zwischen der Außenseite (5') und der Luftspaltwand (19) ein Hohlraum zur Bildung eines Luftspalts entsteht.

2. Bauelement nach Anspruch 1, **dadurch gekennzeichnet, dass** es erste Mittel (8) zur Zirkulation eines Wärmeträgerfluids, die mit der ersten Wand (2) verbunden sind, und zweite Mittel (8') zur Zirkulation eines Wärmeträgerfluids, die mit der zweiten Wand (3) verbunden sind, aufweist.

3. Bauelement nach Anspruch 1 oder 2, **dadurch gekennzeichnet, dass** die ersten Zirkulationsmittel (8) in ein hydraulisches Material (M), das die erste Wand (2) ausbildet, und in die Stärke (e2) der ersten Wand (2) eingebettet sind und dass gegebenenfalls die zweiten Zirkulationsmittel (8') in ein hydraulisches Material (M), das die zweite Wand (3) ausbildet, und in die Stärke (e3) der zweiten Wand (3) eingebettet sind.

4. Bauelement nach einem der Ansprüche 1 bis 3, **dadurch gekennzeichnet, dass** die ersten Zirkulationsmittel (8) und gegebenenfalls die zweiten Zirkulationsmittel (8') einen Einlassabschnitt (10), einen Auslassabschnitt (11) und zumindest eine direkt oder indirekt mit den Abschnitten (10, 11) verbundene Leitung (9) umfassen, wobei der Einlassabschnitt (10) und der Auslassabschnitt (11) zumindest teilweise von der ersten Wand (2) bzw. der zweiten Wand (3), mit der sie verbunden sind, vorstehen und wobei die Leitung (9) in die Stärke (e2) der ersten Wand (2) bzw. in die Stärke (e3) der zweiten Wand (3) eingebettet ist.

5. Bauelement nach Anspruch 4, **dadurch gekennzeichnet, dass** die zumindest eine Leitung (9) die Form einer Schlange oder einer Spirale aufweist, die jeweils mehrere Windungen oder Schleifen umfasst, die sich im Wesentlichen in einer Längserstreckungsebene (A-A) des Bauelements (1) erstrecken.

6. Bauelement nach einem der Ansprüche 1 bis 5, **dadurch gekennzeichnet, dass** die erste Wand (2) zumindest ein hydraulisches Material (M) mit integrierten Bewehrungen (12), vorzugsweise aus Kunststoff oder Metall, umfasst, wobei die Bewehrungen (12) vollständig in die Stärke (e2) der ersten Wand (2) eingebettet sind, und dass die zweite Wand (3) zumindest ein hydraulisches Material (M) mit integrierten Bewehrungen (12'), vorzugsweise aus Kunststoff oder Metall, umfasst, wobei die Bewehrungen (12') teilweise in die Stärke (e3) der zweiten Wand (3) eingebettet sind.

7. Bauelement nach Anspruch 6, **dadurch gekennzeichnet, dass** die ersten Zirkulationsmittel (8) mit ersten Befestigungsmitteln an den Bewehrungen (12) befestigt sind und dass gegebenenfalls die zweiten Zirkulationsmittel (8') mit zweiten Befestigungsmitteln an den Bewehrungen (12') befestigt sind.

8. Bauelement nach Anspruch 6, **dadurch gekennzeichnet, dass** die ersten Zirkulationsmittel (8) mit ersten Befestigungsmitteln an der Dämmwand (4) befestigt sind und dass gegebenenfalls die zweiten Zirkulationsmittel (8') mit zweiten Befestigungsmitteln an den Bewehrungen (12') befestigt sind.

9. Bauelement nach einem der Ansprüche 1 bis 8, **dadurch gekennzeichnet, dass** die Stärke (e2) der ersten Wand (2) zwischen 30 und 200 Millimetern beträgt und dass die Stärke (e8) der ersten Zirkulationsmittel (8) zwischen 8 und 30 Millimetern beträgt.

10. Bauelement nach einem der Ansprüche 1 bis 9, **dadurch gekennzeichnet, dass** es zumindest einen mit den ersten Zirkulationsmitteln (8) verbundenen Temperatursensor umfasst.

11. Bauelement nach einem der Ansprüche 1 bis 10, **dadurch gekennzeichnet, dass** es zumindest einen mit der ersten Wand (2) verbundenen Wärme- oder Sonnenstrahlungssensor umfasst.

12. Bauwerk, **dadurch gekennzeichnet, dass** es zumindest ein Bauelement (1) nach einem der Ansprüche 1 bis 11 umfasst.

13. Bauwerk nach Anspruch 12, **dadurch gekennzeichnet, dass** es zumindest zwei benachbarte Bauelemente (1) umfasst, die jeweils zumindest erste eigene Zirkulationsmittel (8) umfassen, die durch Verbindungsmittel miteinander verbunden sind.

14. Bauwerk nach Anspruch 12, **dadurch gekennzeichnet, dass** es zumindest zwei benachbarte Bauelemente (1) umfasst, die jeweils zumindest erste eigene Zirkulationsmittel (8) umfassen, die jeweils unabhängig voneinander mit Umwälzmitteln oder einem gemeinsamen Wärmetauscher (13) verbunden sind.

15. Bauwerk nach Anspruch 12, **dadurch gekennzeichnet, dass** es zumindest ein Bauelement (1) umfasst, das in der ersten Wand (2) vorgesehene erste Zirkulationsmittel (8) und in der zweiten Wand (3) vorgesehene zweite Zirkulationsmittel (8') umfasst, die über Umwälzmittel oder einen Wärmetauscher (13) miteinander verbunden sind.

16. Bauwerk nach Anspruch 12, **dadurch gekennzeichnet, dass** es zumindest eine Platte (15) umfasst, die Zirkulationsmittel (14) umfasst, und ein Bauelement (1) umfasst, das erste Zirkulationsmittel (8) umfasst, die über Umwälzmittel oder einen Wärmetauscher (13) mit den Zirkulationsmitteln (14) der Platte (15) verbunden sind.

17. Verfahren zur Herstellung eines aus einer Wand mit integrierter Schalung und Dämmung bestehenden Bauelements (1),
wobei das Verfahren **dadurch gekennzeichnet ist, dass** das Bauelement (1) einem der Ansprüche 1 bis 11 entspricht und dass das Verfahren zumindest die folgenden Schritte umfasst:
- einen Schritt der Installation von Zirkulationsmitteln, bei dem die Zirkulationsmittel (8, 8') in einer Form (17, 18) angeordnet werden,
- einen Gießschritt, bei dem ein hydraulisches Material (M) in die Form (17, 18) gegossen wird, um zumindest die Zirkulationsmittel (8, 8') einzubetten, um eine erste Wand (2) oder eine zweite Wand (3) des Fertigbauelements (1) auszubilden.

18. Verfahren nach Anspruch 17, **dadurch gekennzeichnet, dass** es vor dem Schritt der Installation der Zirkulationsmittel einen Bewehrungsschritt umfasst, der darin besteht, zumindest Bewehrungen (12, 12') im Boden (16) der Form (17, 18) anzuordnen, dass während des Schritts der Installation der Zirkulationsmittel die Zirkulationsmittel (8, 8') mit Befestigungsmitteln an den Bewehrungen (12, 12') befestigt werden und dass während des Gießschritts das hydraulische Material (M) in die Form (17, 18) gegossen wird, um zumindest die Bewehrungen (12, 12') und die Zirkulationsmittel (8, 8') einzubetten, um die erste Wand (2) oder die zweite Wand (3) des Fertigbauelements (1) auszubilden.

## Claims

1. Prefabricated construction element (1) comprising:
- a first, external wall (2),
- a second, internal wall (3),
the first wall (2) and the second wall (3) being substantially mutually parallel and kept at a distance from one another,
- an insulating wall (4) interposed between the first wall (2) and the second wall (3),
at least first means (8) for circulation of a heat transfer fluid that are associated with the first wall (2),
- at least means (19, 20, 21) for concentrating thermal radiation that are associated with the external face (5') of the first wall (2) in order to increase the amount of thermal radiation that can be stored in the material (M) of the first wall (2),
said construction element (1) being **characterized**
**in that** it consists of a wall with integrated formwork and insulation,
**in that** the first wall (2) comprises an internal face (5) on the opposite side from an external face (5'), in which the insulating wall (4) is mounted at a contact face (4') of the insulating wall (4), in that the first wall (2) and the insulating wall (4) are kept at a distance from the second wall (3) by a plurality of connecting members (6) so as to form a formwork space (7) that is able and intended to be filled with a hydraulic filling material,
**in that** the means for concentrating thermal radiation comprise an air-gap wall (19) associated with the external face (5') of the first wall (2), and in that the air-gap wall (19) is kept at a distance (d) from the external face (5') so as to create an empty space between the external face (5') and the air-gap wall (19) so as to form an air gap.

2. Construction element according to Claim 1, **characterized in that** it has first means (8) for circulation of a heat-transfer fluid that are associated with the first wall (2) and second means (8') for circulation of a heat-transfer fluid that are associated with the second wall (3).

3. Construction element according to Claim 1 or 2, **characterized in that** the first circulation means (8) are embedded in a hydraulic material (M) forming the first wall (2) and in the thickness (e2) of the first wall (2) and, if appropriate, **in that** the second circulation means (8') are embedded in a hydraulic material (M) forming the second wall (3) and in the thickness (e3) of the second wall (3).

4. Construction element according to any one of Claims 1 to 3, **characterized in that** the first circulation means (8) and, if appropriate, the second circulation means (8') comprise an inlet portion (10), an outlet portion (11), and at least one duct (9) connected directly or indirectly to said portions (10, 11), the inlet portion (10) and the outlet portion (11) protruding at least partially from the first wall (2) or from the second wall (3) with which they are associated and said duct (9) being embedded in the thickness (e2) of the first wall (2) or in the thickness (e3) of the second wall (3).

5. Construction element according to Claim 4, **characterized in that** said at least one duct (9) has a serpentine or spiral shape comprising respectively a plurality of turns or loops extending substantially in a longitudinal extension plane (A-A) of the construction element (1).

6. Construction element according to any one of Claims 1 to 5, **characterized in that** the first wall (2) comprises at least one hydraulic material (M) integrating reinforcements (12), preferably synthetic or metallic reinforcements, the reinforcements (12) being embedded entirely in the thickness (e2) of the first wall (2), and **in that** the second wall (3) comprises at least one hydraulic material (M) integrating reinforcements (12'), preferably synthetic or metallic reinforcements, the reinforcements (12') being partially embedded in the thickness (e3) of the second wall (3).

7. Construction element according to Claim 6, **characterized in that** the first circulation means (8) are fixed to the reinforcements (12) by first fixing means and, if appropriate, **in that** the second circulation means (8') are fixed to the reinforcements (12') by second fixing means.

8. Construction element according to Claim 6, **characterized in that** the first circulation means (8) are fixed to the insulating wall (4) by first fixing means and, if appropriate, **in that** the second circulation means (8') are fixed to the reinforcements (12') by second fixing means.

9. Construction element according to any one of Claims 1 to 8, **characterized in that** the thickness (e2) of the first wall (2) is between 30 and 200 millimetres, and **in that** the thickness(e8) of the first circulation means (8) is between 8 and 30 millimetres.

10. Construction element according to any one of Claims 1 to 9, **characterized in that** it comprises at least one temperature sensor associated with the first circulation means (8).

11. Construction element according to any one of Claims 1 to 10, **characterized in that** it comprises at least one solar or thermal radiation sensor associated with the first wall (2).

12. Building, **characterized in that** it comprises at least one construction element (1) according to any one of Claims 1 to 11.

13. Building according to Claim 12, **characterized in that** it comprises at least two adjacent construction elements (1) each comprising their own at least first circulation means (8) which are connected together by connecting means.

14. Building according to Claim 12, **characterized in that** it comprises at least two adjacent construction elements (1) each comprising their own at least first circulation means (8) which are each connected independently to means for setting in circulation or a common heat exchanger (13).

15. Building according to Claim 12, **characterized in that** it comprises at least one construction element (1) comprising first circulation means (8) provided in the first wall (2) and second circulation means (8') provided in the second wall (3), said circulation means being connected together by way of means for setting in circulation or of a heat exchanger (13).

16. Building according to Claim 12, **characterized in that** it comprises at least one slab (15) comprising circulation means (14) and a construction element (1) comprising first circulation means (8), which are connected to the circulation means (14) of the slab (15) by way of means for setting in circulation or of a heat exchanger (13).

17. Method for manufacturing a construction element (1) consisting of a wall having integrated formwork and insulation,
said method being **characterized in that** the construction element (1) is according to any one of Claims 1 to 11, and **in that** the method involves at least the following steps:
- a step of installing circulation means, during which the circulation means (8, 8') are disposed in a mould (17, 18),
- a pouring step, during which a hydraulic material (M) is poured into said mould (17, 18) in order to embed at least said circulation means (8, 8') in order to form a first wall (2) or a second wall (3) of the prefabricated construction element (1).

18. Method according to Claim 17, **characterized in that** it comprises a reinforcement step, prior to the step of installing the circulation means, consisting in disposing at least reinforcements (12, 12') in the bottom (16) of the mould (17, 18), **in that**, during the step of installing the circulation means, the circulation means (8, 8') are fixed to the reinforcements (12, 12') by fixing means, and **in that**, during the pouring step, the hydraulic material (M) is poured into said mould (17, 18) in order to embed at least the reinforcements (12, 12') and said circulation means (8, 8') in order to form the first wall (2) or the second wall (3) of the prefabricated construction element (1).
